# EUROPEAN PATENT APPLICATION

(11) **EP 3 919 523 A1**
(43) Date of publication of application: **08.12.2021**
(21) Application number: 20749381.8
(22) Date of filing: 29.01.2020
(51) Int. Cl.: C08F 2/44, C08F 220/10, C08F 257/02, C08F 265/06, C08L 25/14, C08L 33/04, C09D 4/00, C09D 7/63, C09D 11/101, C09D 11/106, C09D 125/14, C09D 133/14

(54) **PHOTOCURABLE RESIN COMPOSITION, INK AND COATING MATERIAL**

(30) Priority: 30.01.2019 JP 2019014343; 30.01.2019 JP 2019014344; 30.01.2019 JP 2019014345
(71) Applicant: Osaka Soda Co., Ltd., Osaka-shi Osaka 550-0011 (JP)
(72) Inventor: FUJIYAMA, Takuya, Osaka-shi, Osaka 550-0011 (JP); IWASAKI, Reina, Osaka-shi, Osaka 550-0011 (JP); INOUE, Satoshi, Osaka-shi, Osaka 550-0011 (JP)
(74) Representative: Müller-Boré & Partner Patentanwälte PartG mbB
(86) International application number: PCT/JP2020/003187
(87) International publication number: WO 2020/158805

(57) **Abstract**

The purpose of the present invention is to provide a photocurable resin composition which exhibits excellent compatibility, drying properties when cured by irradiation with light, scratch resistance and adhesion to a substrate. The present invention is a photocurable resin composition containing a styrene-acrylate copolymer and an ethylenically unsaturated compound. The styrene-acrylate copolymer contains 10-90 mol% of constituent units (A) derived from a styrene-based compound and 10-90 mol% of constituent units (B) derived from an acrylate compound. The constituent units (B) derived from an acrylate compound contain constituent units (b-1) derived from a compound having at least three (meth)acryloyl groups in the molecule.

## Description

### TECHNICAL FIELD

A first aspect of the present invention relates to a photocurable resin composition containing a styrene-acrylate copolymer and an ethylenically unsaturated compound, and an ink and a coating material containing the resin composition. More specifically, the first aspect of the present invention relates to a photocurable resin composition excellent in compatibility, drying property, scratch resistance, and adhesion to a base material.

A second aspect of the present invention relates to a photocurable resin composition containing a styrene-acrylate copolymer, a monomer having a radically polymerizable double bond, and a photopolymerization initiator, and an ink and a coating material containing the resin composition. More specifically, the second aspect of the present invention relates to a photocurable resin composition excellent in drying property, scratch resistance, and adhesion to a base material.

A third aspect of the present invention relates to a photocurable resin composition containing a styrene-acrylate copolymer, a monomer having a radically polymerizable double bond, a photopolymerization initiator, and a sensitizer, and an ink and a coating material containing the resin composition. More specifically, the third aspect of the present invention relates to a photocurable resin composition excellent in drying property, scratch resistance, and adhesion to a base material.

### BACKGROUND ART

Conventionally, in order to obtain various printed matters including form printed matters, various book printed matters, various packaging printed matters such as cardboards, various plastic printed matters, printed matters for seals and labels, art printed matters, and metal printed matters (art printed matters, beverage can printed matters, and food printed matters of canned foods and the like), various printing methods such as lithographic printing (normal lithographic printing using dampening water and waterless lithographic printing using no dampening water), relief printing, intaglio printing, and stencil printing have been adopted, and inks suitable for these printing methods have been used. As one of such inks, a photocurable ink has been known.

In recent years, the use of a photocurable ink that is quick to dry and does not use a solvent has been expanded instead of an oil-based ink that has been conventionally used due to an increase in the demand for shorter delivery time of printing and environmental response. Among them, speeding up of the printing has been advanced, and further speeding up of the printing has been desired. For high-speed printing, it is necessary to increase the curing speed (drying property) of the printed film, and as a method therefor, a method using a polyfunctional monomer in which the unsaturated group concentration of a compound having an ethylenically unsaturated double bond is increased, or a method using a high-performance photopolymerization initiator, a sensitizer, or the like has been used (Patent Document 1). However, by using a polyfunctional monomer having a high unsaturated group concentration in the compound, it is possible to increase the curing speed of the film, but the price of the compound becomes expensive, and thus it cannot be said that it is an industrially practical method. In addition, the method using a high-performance photopolymerization initiator also has a problem that the cost increases. Therefore, development of a photocurable composition having excellent curing speed (drying property) of a film and high film strength using a method other than these methods has been earnestly desired.

There has been a demand for development of a photocurable resin composition excellent in various physical properties (compatibility, drying property, scratch resistance, adhesion to a base material, and the like) required when used for an ink or a coating material.

### PRIOR ART DOCUMENT

### PATENT DOCUMENT

Patent Document 1: Japanese Patent Laid-open Publication No. 7-11166

### SUMMARY OF THE INVENTION

### PROBLEMS TO BE SOLVED BY THE INVENTION

An object of the first aspect of the present invention is to provide a photocurable resin composition excellent in compatibility, drying property when cured by irradiation with light, scratch resistance, and adhesion to a base material.

Objects of the second aspect and the third aspect of the present invention are to provide a photocurable resin composition excellent in drying property when cured by irradiation with light, scratch resistance, and adhesion to a base material.

### MEANS FOR SOLVING THE PROBLEM

As a result of intensive studies to solve the above problems of the first aspect, the present inventors have found that a photocurable resin composition containing a specific styrene-acrylate copolymer and an ethylenically unsaturated compound is excellent in various physical properties (compatibility between a styrene-acrylate copolymer and an ethylenically unsaturated compound, drying property, scratch resistance, adhesion to a base material, and the like) required when used as an ink or a coating material, and have completed the first aspect.

As a result of intensive studies to solve the above problems of the second aspect, the present inventors have found that a photocurable resin composition containing a specific styrene-acrylate copolymer, a monomer having a radically polymerizable double bond, and a photopolymerization initiator is excellent in various physical properties (drying property, scratch resistance, adhesion to a base material, and the like) required when used for an ink, and have completed the second aspect.

As a result of intensive studies to solve the above problems of the third aspect, the present inventors have found that a photocurable resin composition containing a specific styrene-acrylate copolymer, a monomer having a radically polymerizable double bond, a photopolymerization initiator, and a sensitizer is excellent in various physical properties (drying property, scratch resistance, adhesion to a base material, and the like) required when used for an ink or a coating material, and have completed the third aspect.

That is, the present invention can be described as follows.

Item 1. A photocurable resin composition containing a styrene-acrylate copolymer and an ethylenically unsaturated compound,
   wherein in the styrene-acrylate copolymer,
   a proportion of a constituent unit (A) derived from the styrene-based compound is 10 to 90 mol%, and
   a proportion of a constituent unit (B) derived from the acrylate compound is 10 to 90 mol%, and
   the constituent unit (B) derived from the acrylate compound contains a constituent unit (b-1) derived from a compound having at least three (meth)acryloyl groups in a molecule.
Item 2. A photocurable resin composition containing a styrene-acrylate copolymer, a monomer having a radically polymerizable double bond, and a photopolymerization initiator,
   wherein in the styrene-acrylate copolymer,
   a proportion of a constituent unit (A) derived from the styrene-based compound is 10 to 90 mol%, and
   a proportion of a constituent unit (B) derived from the acrylate compound is 10 to 90 mol%, and
   the constituent unit (B) derived from the acrylate compound contains a constituent unit (b-1) derived from a compound having at least three (meth)acryloyl groups in a molecule.
Item 3. A photocurable resin composition containing a styrene-acrylate copolymer, a monomer having a radically polymerizable double bond, a photopolymerization initiator, and a sensitizer,
   wherein in the styrene-acrylate copolymer,
   a proportion of a constituent unit (A) derived from the styrene-based compound is 10 to 90 mol%, and
   a proportion of a constituent unit (B) derived from the acrylate compound is 10 to 90 mol%, and
   the constituent unit (B) derived from the acrylate compound contains a constituent unit (b-1) derived from a compound having at least three (meth)acryloyl groups in a molecule.
Item 4. The photocurable resin composition according to any one of items 1 to 3, wherein the compound having at least three (meth)acryloyl groups in the molecule is an acrylate compound having three (meth)acryloyl groups or an acrylate compound having four (meth)acryloyl groups.
Item 5. The photocurable resin composition according to any one of items 1 to 4, wherein the compound having at least three (meth)acryloyl groups in the molecule is at least one selected from the group consisting of trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, and dipentaerythritol tetra(meth)acrylate. Item 6. The photocurable resin composition according to any one of items 1 to 5, wherein the constituent unit (B) derived from the acrylate compound further contains a constituent unit (b-2) derived from an aromatic acrylate compound and a constituent unit (b-3) derived from an aliphatic acrylate compound.
Item 7. The photocurable resin composition according to any one of items 1 to 6, wherein a molecular weight distribution (mass average molecular weight (Mw)/number average molecular weight (Mn)) of the styrene-acrylate copolymer is in a range of 1 to 50.
Item 8. The photocurable resin composition according to any one of items 1 to 7, wherein an iodine value of the styrene-acrylate copolymer is 1 to 100.
Item 9. An ink containing the photocurable resin composition according to any one of items 1 to 8.
Item 10. A coating material containing the photocurable resin composition according to any one of items 1 to 8.
Item 11. The coating material according to item 10, which is the overprint varnish.

### ADVANTAGES OF THE INVENTION

According to the first aspect of the present invention, by using a photocurable resin composition containing a specific styrene-acrylate copolymer and an ethylenically unsaturated compound for an ink or a coating material, an ink or a coating material excellent in various physical properties (compatibility, drying property, scratch resistance, and adhesion to a base material) can be obtained.

According to the second aspect of the present invention, by using a photocurable resin composition containing a specific styrene-acrylate copolymer, a monomer having a radically polymerizable double bond, and a photopolymerization initiator for an ink or a coating material, an ink or a coating material excellent in various physical properties (drying property, scratch resistance, and adhesion to a base material) can be obtained.

According to the third aspect of the present invention, by using a photocurable resin composition containing a specific styrene-acrylate copolymer, a monomer having a radically polymerizable double bond, a photopolymerization initiator, and a sensitizer for an ink or a coating material, an ink or a coating material excellent in various physical properties (drying property, scratch resistance, and adhesion to a base material) can be obtained.

### EMBODIMENTS OF THE INVENTION

Hereinafter, details of the first aspect, the second aspect, and the third aspect of the present invention will be described in order. In the description of the second aspect, the description common to the description of the first aspect is appropriately omitted. In the description of the third aspect, the description common to the description of the first aspect or the second aspect is appropriately omitted.

### 1. First aspect

The photocurable resin composition of the first aspect contains a styrene-acrylate copolymer and an ethylenically unsaturated compound, wherein, in the styrene-acrylate copolymer, the proportion of a constituent unit (A) derived from the styrene-based compound is 10 to 90 mol%, and the proportion of a constituent unit (B) derived from the acrylate compound is 10 to 90 mol%, and the constituent unit (B) derived from an acrylate compound contains a constituent unit (b-1) derived from a compound having at least three (meth)acryloyl groups in the molecule.

### 1-1. Styrene-acrylate copolymer

In the photocurable resin composition of the first aspect, the styrene-acrylate copolymer is a copolymer of a styrene-based compound and an acrylate compound, in which the proportion of a constituent unit (A) derived from the styrene-based compound is 10 to 90 mol%, and the proportion of a constituent unit (B) derived from the acrylate compound is 10 to 90 mol%, and the constituent unit (B) derived from an acrylate compound contains a constituent unit (b-1) derived from a compound having at least three (meth)acryloyl groups in the molecule.

In the first aspect, the (meth)acryloyl group means an acryloyl group or a methacryloyl group. In addition, the (meth)acrylate means acrylate or methacrylate.

In the styrene-acrylate copolymer, the proportion of the constituent unit (A) derived from a styrene-based compound may be 10 to 90 mol%, but is preferably 20 to 80 mol% and more preferably 20 to 50 mol% from the viewpoint of suitably obtaining an ink or a coating material excellent in compatibility with an ethylenically unsaturated compound, drying property, scratch resistance, and adhesion to a base material. Also, the proportion of the constituent unit (B) derived from an acrylate compound may be 10 to 90 mol%, but is preferably 20 to 80 mol% and more preferably 50 to 80 mol% from the viewpoint of suitably obtaining an ink or a coating material excellent in compatibility with an ethylenically unsaturated compound, drying property, scratch resistance, and adhesion to a base material.

### 1-2.Constituent unit (A) derived from styrene-based compound

In the styrene-acrylate copolymer, the constituent unit (A) derived from a styrene-based compound is not particularly limited, but from the viewpoint of suitably obtaining an ink or a coating material excellent in compatibility, drying property, scratch resistance, and adhesion to a base material, for example, styrene; alkyl-substituted styrenes such as methylstyrene, α-methylstyrene, β-methylstyrene, p-methylstyrene, and tert-butylstyrene; halogen-substituted styrenes such as 4-chlorostyrene, 4-bromostyrene, and chloromethylstyrene; hydroxystyrenes such as p-hydroxystyrene, α-methyl-p-hydroxystyrene, 2-methyl-4-hydroxystyrene, and 3,4-dihydroxystyrene; vinylbenzyl alcohols; alkoxy-substituted styrenes such as p-methoxystyrene, p-tert-butoxystyrene, and m-tert-butoxystyrene; vinylbenzoic acids such as 3-vinylbenzoic acid and 4-vinylbenzoic acid; 4-vinylbenzyl acetate; 4-acetoxystyrene; amidostyrenes such as 2-butylamidostyrene, 4-methylamidostyrene, and p-sulfonamidostyrene; aminostyrenes such as 3-aminostyrene, 4-aminostyrene, 2-isopropenylaniline, and vinylbenzyldimethylamine; nitrostyrenes such as 3-nitrostyrene and 4-nitrostyrene; cyanostyrenes such as 3-cyanostyrene and 4-cyanostyrene; vinylphenylacetonitrile; and arylstyrenes such as phenylstyrene, and indenes can be exemplified. Among them, styrene; alkyl-substituted styrenes such as methylstyrene, α-methylstyrene, β-methylstyrene, p-methylstyrene, and tert-butylstyrene; halogen-substituted styrenes such as 4-chlorostyrene, 4-bromostyrene, and chloromethylstyrene; and hydroxystyrenes such as p-hydroxystyrene, α-methyl-p-hydroxystyrene, 2-methyl-4-hydroxystyrene, and 3,4-dihydroxystyrene are preferable, and styrene; and alkyl-substituted styrenes such as methylstyrene, α-methylstyrene, β-methylstyrene, p-methylstyrene, and tert-butylstyrene are more preferable.

### 1-3. Constituent unit (B) derived from acrylate compound

In the styrene-acrylate copolymer, the constituent unit (B) derived from an acrylate compound may be one containing a constituent unit (b-1) derived from a compound having at least three (meth)acryloyl groups in the molecule.

In the constituent unit (b-1), the compound having at least three (meth)acryloyl groups in the molecule is preferably an acrylate compound having three (meth)acryloyl groups or an acrylate compound having four (meth)acryloyl groups from the viewpoint of suitably obtaining an ink or a coating material excellent in compatibility, drying property, scratch resistance, and adhesion to a base material. Specifically, trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, and dipentaerythritol hexa(meth)acrylate are preferable, and trimethylolpropane tri(meth)acrylate, trimethylolpropane polyethoxy tri(meth)acrylate, trimethylolpropane polypropoxy tri(meth)acrylate, pentaerythritol tri(meth)acrylate, pentaerythritol tetra(meth)acrylate, and ditrimethylolpropane tetra(meth)acrylate are more preferable.

The constituent unit (B) derived from an acrylate compound may further contain a constituent unit (b-2) derived from an aromatic acrylate compound and a constituent unit (b-3) derived from an aliphatic acrylate compound. The aromatic acrylate compound and the aliphatic acrylate compound do not include a compound having at least three (meth)acryloyl groups in the molecule of the constituent unit (b-1) described above.

When the constituent unit (B) derived from an acrylate compound contains the constituent unit (b-1) derived from a compound having at least three (meth)acryloyl groups in the molecule, the constituent unit (b-2) derived from an aromatic acrylate compound, and the constituent unit (b-3) derived from an aliphatic acrylate compound, the ratio of the constituent units ((b-1): (b-2): (b-3)) is preferably in a range of 1 to 4: 1 to 5: 1 to 4, and more preferably in a range of 1 to 3: 1 to 4: 1 to 3.

The constituent unit (b-2) derived from an aromatic acrylate compound may be an aromatic acrylate compound having one or two (meth)acryloyl groups in the molecule (preferably, an aromatic acrylate compound having one (meth)acryloyl group in the molecule). Specific examples thereof include benzyl (meth)acrylate, phenyl (meth)acrylate, phenoxyethyl (meth)acrylate, phenoxypolyethylene glycol (meth)acrylate, biphenyl (meth)acrylate, nonylphenyl (meth)acrylate, nonylphenoxyethyl (meth)acrylate, nonylphenoxypolyethylene glycol (meth)acrylate, cumylphenol (meth)acrylate, cumylphenoxyethyl (meth)acrylate, cumylphenoxypolyethylene glycol (meth)acrylate, o-phenylphenol (meth)acrylate, ethoxylated o-phenylphenol (meth)acrylate, tribromophenyl (meth)acrylate, and ethylene oxide-modified tribromophenyl (meth)acrylate. Among them, benzyl (meth)acrylate and phenoxyethyl (meth)acrylate are preferable.

The constituent unit (b-3) derived from an aliphatic acrylate compound may be an aliphatic acrylate compound having one or two (meth)acryloyl groups in the molecule (preferably, an aliphatic acrylate compound having one (meth)acryloyl group in the molecule). Specific examples thereof include methyl (meth)acrylate, ethyl (meth)acrylate, propyl (meth)acrylate, n-butyl (meth)acrylate, isobutyl (meth)acrylate, tert-butyl (meth)acrylate, hexyl(meth)acrylate, 2-ethylhexyl (meth)acrylate, isooctyl (meth)acrylate, isononyl (meth)acrylate, isopentyl (meth)acrylate, tridecyl (meth)acrylate, stearyl (meth)acrylate, and lauryl (meth)acrylate. Among them, hexyl(meth)acrylate, 2-ethylhexyl(meth)acrylate, and isooctyl (meth)acrylate are preferable.

The constituent unit (B) derived from an acrylate compound in the styrene-acrylate copolymer may further contain a constituent unit (b-4) derived from another acrylate compound. In this case, the ratio of the constituent unit (b-4) derived from another acrylate compound in the constituent unit (B) derived from an acrylate compound is preferably in a range of 100: 0 to 80: 20, more preferably in a range of 100: 0 to 90: 10, where the sum of the constituent unit (b-1) derived from a compound having at least three (meth)acryloyl groups in the molecule, the constituent unit (b-2) derived from an aromatic acrylate compound, and the constituent unit (b-3) derived from an aliphatic acrylate compound : the constituent unit (b-4) derived from another acrylate compound.

When the constituent unit (B) derived from an acrylate compound in the styrene-acrylate copolymer of the first aspect further contains the constituent unit (b-4) derived from another acrylate compound, the other acrylate compound does not include the compound having at least three (meth)acryloyl groups in the molecule, the aromatic acrylate compound, and the aliphatic acrylate compound described above.

Examples of the other acrylate compound include monofunctional acrylates and bifunctional acrylates other than the compound having at least three (meth)acryloyl groups in the molecule, the aromatic acrylate compound, and the aliphatic acrylate compound described above.

Examples of the monofunctional acrylate include (meth)acrylate of ethylene oxide adduct, isobornyl (meth)acrylate, cyclohexyl(meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerol mono(meth)acrylate, acryloxyethyl phthalate, 2-(meth)acryloyloxyethyl-2-hydroxyethyl phthalate, 2-(meth)acryloyloxypropyl phthalate, β-carboxyethyl (meth)acrylate, a (meth)acrylic acid dimer, ω-carboxy-polycaprolactone mono(meth)acrylate, dimethylaminoethyl (meth)acrylate, diethylaminoethyl (meth)acrylate, and (meth)acryloylmorpholine.

Examples of the bifunctional acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentandiol di(meth)acrylate, tricyclodecane dimethylol di(meth)acrylate, tricyclodecane dimethylol dicaprolactonate di(meth)acrylate, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, and bisphenol F tetraethylene oxide adduct dicaprolactonate di(meth)acrylate.

Among them, (meth)acryloylmorpholine is preferable.

When the constituent unit (B) derived from an acrylate compound in the styrene-acrylate copolymer contains the constituent unit (b-4) derived from another acrylate compound, the proportion of the constituent unit (b-4) derived from another acrylate compound is preferably in a range of 0 mol% to 20 mol%, more preferably in a range of 0 mol% to 10 mol% in the entire constituent unit (B) derived from an acrylate compound.

The styrene-acrylate copolymer may further contain a constituent unit (C) derived from a carboxylic acid. When the styrene-acrylate copolymer contains the constituent unit (C) derived from a carboxylic acid, the proportion of the constituent unit (C) derived from a carboxylic acid is preferably in a range of 0 to 20 mol%, and more preferably in a range of 0 to 10 mol%.

The carboxylic acid is not particularly limited, but is preferably an unsaturated aliphatic carboxylic acid, and more preferably (meth)acrylic acid, maleic acid, itaconic acid, and the like.

The molecular weight distribution (mass average molecular weight (Mw)/number average molecular weight (Mn)) of the styrene-acrylate copolymer is preferably in a range of 1 to 50, more preferably in a range of 1 to 40, and still more preferably in a range of 1 to 30.

The number average molecular weight (Mn) of the styrene-acrylate copolymer is not particularly limited, but is preferably 1,000 to 100,000, more preferably 1,000 to 50,000, and still more preferably 1,000 to 30,000. The mass average molecular weight (Mw) of the styrene-acrylate copolymer is not particularly limited, but is preferably 1,000 to 500,000, more preferably 1,000 to 400,000, and still more preferably 1,000 to 300,000. In the present specification, the "number average molecular weight" and the "mass average molecular weight" are determined by performing measurement at 40°C using gel permeation chromatography (Prominence-i, LC-2030, manufactured by Shimadzu Corporation) and using a standard polystyrene calibration curve. The iodine value of the styrene-acrylate copolymer is not particularly limited, but is preferably 1 to 100, more preferably 1 to 80, and still more preferably 1 to 50.

For the polymerization reaction for obtaining the styrene-acrylate copolymer, the styrene-acrylate copolymer can be synthesized by a known method using the raw materials as described above. Various conditions in this synthesis need to be appropriately set according to the raw materials to be used and the amounts thereof. In this polymerization reaction, a catalyst can be used as necessary. Examples of the catalyst include known catalysts including azo initiators such as azobisisobutyronitrile and dimethyl 2,2'-azobisisobutyrate, peroxide initiators such as ketone peroxides, peroxyketals, hydroperoxides, dialkyl peroxides, diacyl peroxides, and peroxyesters, acetophenone-based catalysts such as 1-hydroxycyclohexyl phenyl ketone, benzoin-based catalysts such as benzoin and benzoin ethyl ether, benzophenone-based catalysts such as benzophenone, phosphorus-based catalysts such as acylphosphine oxide, and sulfur-based catalysts such as thioxanthone.

Specific examples of the ketone peroxides include methyl ethyl ketone peroxide, methyl isobutyl ketone peroxide, acetyl acetone peroxide, cyclohexanone peroxide, and methyl cyclohexanone peroxide.

Specific examples of the hydroperoxides include 1,1,3,3-tetramethylbutyl hydroperoxide, cumene hydroperoxide, tert-butyl hydroperoxide, p-menthane hydroperoxide, and diisopropylbenzene hydroperoxide.

Specific examples of the diacyl peroxides include diisobutyryl peroxide, bis-3,5,5-trimethylhexanol peroxide, dilauroyl peroxide, dibenzoyl peroxide, m-toluyl benzoyl peroxide, and succinic acid peroxide.

Specific examples of the dialkyl peroxides include dicumyl peroxide, 2,5-dimethyl-2,5-bis(tert-butylperoxy)hexane, 1,3-bis(tert-butylperoxyisopropyl)hexane, tert-butylcumyl peroxide, di-tert-butyl peroxide, di-tert-hexyl peroxide, and 2,5-dimethyl-2,5-bis(tert-butylperoxy)hexyne-3.

Specific examples of the peroxyketals include 1,1-bis(tert-hexylperoxy)-3,3,5-trimethylcyclohexane, 1,1-bis(tert-hexylperoxy)cyclohexane, 1,1-bis(tert-butylperoxy)-2-methylcyclohexane, 1,1-bis(tert-butylperoxy)cyclohexane, 2,2-bis(tert-butylperoxy)butane, and butyl 4,4-bis(tert-butylperoxy)pentanoate, and 1,1-di(tert-hexylperoxy)cyclohexane.

Specific examples of the alkyl peresters (peroxy esters) include 1,1,3,3-tetramethylbutyl peroxyneodecanoate, α-cumyl peroxyneodecanoate, tert-butyl peroxyneodecanoate, tert-hexyl peroxyneodecanoate, tert-butyl peroxyneoheptanoate, tert-hexyl peroxypivalate, tert-butyl peroxypivalate, 1,1,3,3-tetramethylbutyl peroxy-2-ethylhexanoate, tert-amylperoxy-2-ethylhexanoate, tert-butylperoxy-2-ethylhexanoate, tert-butylperoxy isobutyrate, di-tert-butyl peroxy hexahydroterephthalate, 1,1,3,3-tetramethylbutyl peroxy-3,5,5-trimethylhexanate, tert-amylperoxy 3,5,5-trimethylhexanoate, tert-butylperoxy-3,5,5-trimethylhexanoate, tert-butylperoxy acetate, tert-butylperoxybenzoate, dibutyl peroxytrimethyladipate, 2,5-dimethyl-2,5-di-2-ethylhexanoylperoxyhexane, tert-hexylperoxy-2-ethylhexanoate, tert-hexylperoxyisopropyl monocarbonate, tert-butyl peroxylaurate, tert-butylperoxyisopropyl monocarbonate, tert-butylperoxy-2-ethylhexyl monocarbonate, 2,5-dimethyl-2,5-di-benzoylperoxyhexane, tert-hexyl peroxybenzoate, and tert-hexylperoxy-acetic acid ester.

Regarding the order of addition of the raw materials used in the reaction of the styrene-acrylate copolymer of the first aspect, the polymerization reaction may be started by adding all the raw materials used in the reaction to the reaction vessel and then heating the mixture, a part of the raw materials may be added first to the reaction vessel and heated, and then the polymerization reaction may be performed while adding the rest dropwise, or the polymerization reaction may be performed while adding the solvent to the reaction vessel and heating the mixture of the raw materials used in the reaction dropwise. The addition amount of the catalyst used in the reaction of the styrene-acrylate copolymer of the first aspect may be appropriately adjusted. The addition amount is preferably 10.0 parts by mass or less, and more preferably 8.0 parts by mass or less with respect to 100 parts by mass of the component used in the polymerization reaction. The addition amount of the catalyst is more preferably 0.001 to 8.0 parts by mass.

In the polymerization reaction, a solvent may be used as necessary. When a solvent is used, the solvent is preferably used in an amount of 80 mass% or less with respect to the total amount of the reaction solution.

Examples of the solvent include alcohols such as methyl alcohol, ethyl alcohol, n-propyl alcohol, isopropyl alcohol, and n-butyl alcohol; ketones such as acetone, methyl ethyl ketone, methyl-n-propyl ketone, methyl isopropyl ketone, methyl-n-butyl ketone, methyl isobutyl ketone, methyl-n-amyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclohexanone, methyl cyclohexanone, and isophorone; esters such as methyl acetate, ethyl acetate, n-propyl acetate, isopropyl acetate, n-butyl acetate, isobutyl acetate, hexyl acetate, octyl acetate, methyl lactate, propyl lactate, and butyl lactate; glycols and glycol ethers such as ethylene glycol, ethylene glycol monoisopropyl ether, ethylene glycol monobutyl ether, ethylene glycol monohexyl ether, diethylene glycol monomethyl ether, diethylene glycol monoethyl ether, diethylene glycol monobutyl ether, ethylene glycol dimethyl ether, ethylene glycol diethyl ether, diethylene glycol dimethyl ether, diethylene glycol diethyl ether, propylene glycol, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol dipropyl ether, and tripropylene glycol monomethyl ether; glycol acetates such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, propylene glycol monoethyl ether acetate, propylene glycol monobutyl ether acetate, and dipropylene glycol monomethyl ether acetate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic esters such as γ-butyrolactone and δ-valerolactone; nitrogen-containing heterocycles such as N-methyl-2-pyrrolidone and N-ethyl-2-pyrrolidone; cyclic unsaturated hydrocarbons such as cyclohexene, cycloheptene, cyclooctene, and 1,1,3,5,7-cyclooctatetraene, and cyclododecene; and aromatic hydrocarbons such as benzene, toluene, xylene, and mesitylene. These organic solvents may be used alone, or two or more thereof may be used in combination.

The reaction atmosphere is preferably an inert gas atmosphere such as nitrogen or argon. The reaction pressure may be either atmospheric pressure or pressurized, but it is preferable to perform the reaction under atmospheric pressure in view of convenience of operation. The reaction can be performed by charging the raw material once or in a divided manner into a reactor equipped with a stirring blade and then reacting the raw material at a predetermined temperature. The reaction temperature during polymerization is preferably 60 to 240°C, for example, 80 to 220°C. The reaction time is preferably 0.1 to 100 hours, for example, 0.5 to 30 hours.

The content of the styrene-acrylate copolymer in the photocurable resin composition is not particularly limited, but is preferably in a range of 1 to 50 mass%, and more preferably in a range of 1 to 45 mass%.

### 1-4. Ethylenically unsaturated compound

The photocurable resin composition of the first aspect contains an ethylenically unsaturated compound that can be cured by irradiation with light. The ethylenically unsaturated compound preferably has 1 to 20, more preferably 1 to 10, and still more preferably 2 to 6 carbon-carbon double bonds. Examples of the ethylenically unsaturated compound include a (meth)acrylic acid ester compound, a (meth)allyl compound, and a vinyl compound. It is also possible to use a mixture of two or more kinds of compounds as the ethylenically unsaturated compound.

Examples of the (meth)acrylic acid ester compound include (meth)acrylic acid ester compounds of alcohols such as pentaerythritol, dipentaerythritol, trimethylolpropane, ditrimethylolpropane, neopentyl glycol, 1,6-hexanediol, glycerol, poly (for example, di, tri, and the like) ethylene glycol, and poly (for example, di, tri, and the like) propylene glycol, and (meth) acrylic acid ester compounds obtained by adding an alkylene oxide such as ethylene oxide and propylene oxide thereto; (meth)acrylic acid ester compounds obtained by adding an alkylene oxide such as ethylene oxide and propylene oxide to a bisphenol such as bisphenol A and bisphenol F; (meth)acrylic acid ester compounds such as epoxy (meth)acrylate, urethane (meth)acrylate, and alkyd (meth)acrylate; and (meth)acrylic acid ester compounds such as epoxidized soybean oil acrylate, preferred examples include (meth)acrylic acid ester compounds of alcohols such as pentaerythritol, dipentaerythritol, trimethylolpropane, ditrimethylolpropane, neopentyl glycol, 1,6-hexanediol, glycerol, poly (for example, di, tri, and the like) ethylene glycol, and poly (for example, di, tri, and the like) propylene glycol, and (meth)acrylic acid ester compounds obtained by adding an alkylene oxide such as ethylene oxide and propylene oxide thereto, and more preferred examples include (meth)acrylic acid ester compounds of alcohols such as pentaerythritol, dipentaerythritol, trimethylolpropane, ditrimethylolpropane, glycerol, 1,6-hexanediol, and tripropylene glycol, and (meth)acrylic acid ester compounds obtained by adding an alkylene oxide such as ethylene oxide and propylene oxide thereto.

Examples of the (meth)allyl compound include di(meth)allyl phthalate and tri(meth)allyl isocyanurate. Examples of the vinyl compound include styrene, divinylbenzene, N-vinylpyrrolidone, and vinyl acetate.

Among them, dipentaerythritol hexaacrylate, ditrimethylolpropane tetraacrylate, ethylene oxide-modified trimethylolpropane triacrylate, propylene oxide-modified trimethylolpropane triacrylate, trimethylolpropane triacrylate, tripropylene glycol diacrylate, propylene oxide-modified glycerol triacrylate, and 1,6-hexanediol diacrylate are more preferable from the viewpoint of drying property when photocured.

The content of the ethylenically unsaturated compound contained in the photocurable resin composition of the first aspect is preferably 50 to 1,200 parts by mass, more preferably 100 to 1,100 parts by mass, and still more preferably 150 to 1,000 parts by mass with respect to 100 parts by mass of the styrene-acrylate copolymer in the photocurable resin composition.

### 1-5. Other additives

The photocurable resin composition of the first aspect may contain a polymerization initiator, and particularly preferably contains a photopolymerization initiator. Examples of the photopolymerization initiator contained in the photocurable resin composition include, but are not particularly limited to, acetophenones such as acetophenone, 2,2-dimethoxy-2-phenylacetophenone, 2,2-diethoxy-2-phenylacetophenone, 1,1-dichloroacetophenone, 1-hydroxy-cyclohexyl-phenyl ketone, and 2-hydroxy-2-methyl-1-phenylpropanone; α-aminoalkylphenones such as 2-benzyl-2-dimethylamino-1-(4-morpholinophenyl)-butanone-1, 2-(dimethylamino)-2-[(4-methylphenyl)methyl]-1-[4-(4-morpholinyl)phenyl]-1-butanon e, 2-methyl-1-[4-(methylthio)phenyl]-2-morpholinopropane-1-one, 2-dimethylamino-2-(4-methylbenzyl)-1-(4-morpholine-4-yl-phenyl)-butane-1-one, and N,N-dimethylaminoacetophenone; oxime esters such as 1.2-octanedione,1-[4-(phenylthio)-,2-(O-benzoyloxime)], ethanone,1-[9-ethyl-6-(2-methylbenzoyl)-9H-carbazole-3-yl]-,1-(0-acetyloxime); acylphosphines such as 2,4,6-trimethylbenzoyldiphenylphosphine oxide, and bis(2,4,6-trimethylbenzoyl)-phenylphosphine oxide; butyroine, and azobisisobutyronitrile. Among them, acetophenones, α-aminoalkylphenones, acylphosphine oxides, and oxime esters are preferable, and acetophenones, α-aminoalkylphenones, and acylphosphine oxides are more preferable. These photopolymerization initiators may be used alone, or two or more thereof may be used in combination. Furthermore, it is also possible to use a photopolymerization initiator and a sensitizer in combination.

The amount of the photopolymerization initiator contained in the photocurable resin composition is preferably in a range of 0.1 to 15 mass%, more preferably in a range of 0.5 to 12 mass%, and still more preferably in a range of 1 to 12 mass% with respect to the entire photocurable resin composition.

A sensitizer (for example, an amine-based sensitizer such as triethanolamine) may be used in combination with the photocurable resin composition.

The amount of the sensitizer is preferably in a range of 0.1 to 5 mass%, and more preferably in a range of 0.5 to 3 mass% with respect to the entire photocurable resin composition.

The photocurable resin composition of the first aspect can contain, according to the purpose, various additives such as a stabilizer (for example, a polymerization inhibitor such as hydroquinone and methoquinone), a colorant such as a pigment, a filler, and a viscosity modifier. Specific examples of the pigment include various known pigments including inorganic pigments such as chrome yellow, zinc yellow, Prussian blue, barium sulfate, cadmium red, titanium oxide, zinc oxide, red iron oxide, alumina white, calcium carbonate, ultramarine blue, carbon black, graphite, aluminum powder, and red oxide; and organic pigments such as soluble azo pigments such as β-naphthol-based, β-oxynaphthoic acid-based, β-oxynaphthoic acid anilide-based, acetoacetanilide-based, and pyrazolone-based pigments, insoluble azo pigments such as β-naphthol-based, β-oxynaphthoic acid anilide-based, acetoacetanilide-based monoazo, acetoacetanilide-based disazo, and pyrazolone-based pigments, phthalocyanine pigments such as copper phthalocyanine blue, halogenated (chlorinated or brominated) copper phthalocyanine blue, sulfonated copper phthalocyanine blue, and metal free phthalocyanine pigments, and polycyclic pigments and heterocyclic pigments such as quinacridone-based, dioxazine-based, threne-based (pyranthrone, anthanthrone, indanthrone, anthrapyrimidine, flavanthrone, thioindigo-based, anthraquinone-based, perinone-based, perylene-based pigments), isoindolinone-based, metal complex-based, and quinophthalone-based pigments.

The amount of the stabilizer contained in the photocurable resin composition is preferably in a range of 0.01 to 2 mass%, and more preferably in a range of 0.1 to 1 mass% with respect to the entire photocurable resin composition.

The amount of the colorant is preferably in a range of 1 to 50 mass%, and more preferably in a range of 1 to 45 mass% with respect to the entire photocurable resin composition.

### 1-6. Method for producing photocurable resin composition and use thereof

The photocurable resin composition of the first aspect can be produced by adding a styrene-acrylate copolymer to an ethylenically unsaturated compound, and further mixing a photopolymerization initiator, a sensitizer, and an additive (for example, a stabilizer, and a pigment) thereto as necessary. The photocurable resin composition of the first aspect is cured by irradiation with light. The light used for curing is generally ultraviolet rays. In the case of ultraviolet irradiation, mercury free has been strongly desired from the viewpoint of environmental protection, and replacement with a GaN-based semiconductor ultraviolet light-emitting device is very useful in industrial and environmental respects. Furthermore, an ultraviolet light-emitting diode (UV-LED) and an ultraviolet laser diode (UV-LD) are compact, have a long life, have high efficiency, and are produced at low cost, and thus are preferable as an ultraviolet ray light source.

The curing apparatus used for the curing reaction of the photocurable resin composition and the curing conditions are not particularly limited, and any method may be used as long as it is used for a normal photocuring reaction.

The use of the photocurable resin composition of the first aspect is not particularly limited. The photocurable resin composition of the first aspect can be used in technical fields such as inks (for example, printing inks such as photocurable lithographic printing inks, silkscreen inks, or gravure inks), coating materials (coating materials for paper, plastic, metal, wood, and the like, for example, overprint varnishes), adhesives, and photoresists. The base material of the printed matter is not particularly limited, and examples thereof include printing on any material such as paper, plastic, a seal, a label, and metal, and printing on paper is preferable.

The ink containing the photocurable resin composition of the first aspect is the ink of the first aspect, and the coating material containing the photocurable resin composition of the first aspect is the coating material of the first aspect. The coating material of the first aspect is preferably an overprint varnish.

The method for producing the photocurable resin composition of the first aspect may be carried out in the same manner as in the conventional photocurable resin composition. For example, the photocurable resin composition of the first aspect is produced using composition components such as the styrene-acrylate copolymer of the first aspect, the ethylenically unsaturated compound, and if necessary, the photopolymerization initiator and the sensitizer, and other additives, and using a kneading, mixing, and adjusting machine such as a kneader, a triple roll mill, an attritor, a sand mill, a gate mixer, or the like at a temperature of from normal temperature to 100°C.

A more specific general method for producing the ink is as follows. A styrene-acrylate copolymer, a stabilizer, and the like are dissolved in an ethylenically unsaturated compound at a temperature of 60°C to 100°C with stirring to prepare a varnish. The varnish is stirred and mixed with a pigment, a photopolymerization initiator, and other additives using a butterfly mixer, and then kneaded with a triple roll mill or the like to obtain an ink. The overprint varnish can be produced by the same procedure as the ink except that no pigment is used.

### 2. Second aspect

The photocurable resin composition of the second aspect contains a styrene-acrylate copolymer, a monomer having a radically polymerizable double bond, and a photopolymerization initiator, wherein, in the styrene-acrylate copolymer, the proportion of a constituent unit (A) derived from a styrene-based compound is 10 to 90 mol%, and the proportion of a constituent unit (B) derived from an acrylate compound is 10 to 90 mol%, and the constituent unit (B) derived from an acrylate compound contains a constituent unit (b-1) derived from a compound having at least three (meth)acryloyl groups in the molecule.

### 2-1. Styrene-acrylate copolymer

In the photocurable resin composition of the second aspect, the description regarding the styrene-acrylate copolymer is the same as the description in the section "1-1. Styrene-acrylate copolymer" of the first aspect.

### 2-2. Constituent unit (A) derived from styrene-based compound

In the photocurable resin composition of the second aspect, the description regarding the constituent unit (A) derived from a styrene-based compound is the same as the description in the section "1-2. Constituent unit (A) derived from styrene-based compound" of the first aspect.

### 2-3. Constituent unit (B) derived from acrylate compound

In the photocurable resin composition of the second aspect, the description regarding the constituent unit (B) derived from an acrylate compound is the same as the description in the section "1-3. Constituent unit (B) derived from acrylate compound" of the first aspect.

However, in the second aspect, the content of the styrene-acrylate copolymer in the photocurable resin composition is not particularly limited, but is preferably in a range of 1 to 50 mass%, and more preferably in a range of 1 to 40 mass%.

### 2-4. Monomer having radically polymerizable double bond

Examples of the monomer having a radically polymerizable double bond in the photocurable resin composition of the second aspect include a compound containing a (meth)acryloyl group, and specifically, the followings can be exemplified.

Examples of the monofunctional acrylate include alkyl (meth)acrylates having 1 to 18 carbon atoms such as methyl (meth)acrylate, ethyl (meth)acrylate, butyl (meth)acrylate, hexyl(meth)acrylate, octyl(meth)acrylate, dodecyl (meth)acrylate, and stearyl (meth)acrylate, and further include benzyl (meth)acrylate, isobornyl (meth)acrylate, cyclohexyl(meth)acrylate, tricyclodecane monomethylol (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-phenoxypropyl (meth)acrylate, 2-hydroxy-3-butoxypropyl (meth)acrylate, 2-hydroxy-3-methoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, glycerol mono(meth)acrylate, acryloxyethyl phthalate, 2-(meth)acryloyloxyethyl-2-hydroxyethyl phthalate, 2-(meth)acryloyloxypropyl phthalate, β-carboxyethyl (meth)acrylate, a (meth)acrylic acid dimer, ω-carboxy-polycaprolactone mono(meth)acrylate, dimethylaminoethyl (meth)acrylate, diethylaminoethyl (meth)acrylate, and (meth)acryloylmorpholine.

Further, examples of the bifunctional acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,2-decanediol di(meth)acrylate, 1,10-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethylol octane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecane dimethylol di(meth)acrylate, and tricyclodecane dimethylol dicaprolactonate di(meth)acrylate.

Examples of the trifunctional acrylate include glycerol tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, and pentaerythritol tri(meth)acrylate.

Examples of the tetra or higher functional acrylate include pentaerythritol tetra(meth)acrylate, pentaerythritol tetracaprolactonate tetra(meth)acrylate, diglycerol tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, and tripentaerythritol polyalkylene oxide hepta(meth)acrylate.

Further, as the compound containing a (meth)acryloyl group, an alkylene oxide adduct (meth)acrylate of an aliphatic alcohol compound can be exemplified.

Examples of the alkylene oxide adduct (meth)acrylate of an aliphatic alcohol compound include mono or poly (1 to 20) alkylene (C2 to C20) oxide adducts of an aliphatic alcohol compound (as the alkylene oxide, for example, ethylene oxide, propylene oxide, butylene oxide, pentylene oxide, hexylene oxide, and the like), and mono or poly (1 to 10) (meth)acrylates. More specific examples thereof include monofunctional modified acrylates, bifunctional modified acrylates, trifunctional modified acrylates, and tetrafunctional modified acrylates.

Examples of the monofunctional modified acrylate include alkylene oxide adduct (meth)acrylates having 2 to 20 carbon atoms, such as methanol mono or poly (1 to 20) alkylene (C2 to C20) oxide adduct (as the alkylene oxide, for example, ethylene oxide, propylene oxide, and butylene oxide) (meth)acrylates, ethanol mono or poly (1 to 20) alkylene (C2 to C20) oxide adduct (as the alkylene oxide, for example, ethylene oxide, propylene oxide, and butylene oxide) (meth)acrylates, butanol mono or poly (1 to 20) alkylene (C2 to C20) oxide adduct (as the alkylene oxide, for example, ethylene oxide, propylene oxide, and butylene oxide) (meth)acrylates, hexanol mono or poly (1 to 20) alkylene (C2 to C20) oxide adduct (as the alkylene oxide, ethylene oxide, propylene oxide, and butylene oxide) (meth)acrylates, octanol mono or poly (1 to 20) alkylene (C2 to C20) oxide adduct (as the alkylene oxide, for example, ethylene oxide, propylene oxide, and butylene oxide) (meth)acrylates, dodecanol mono or poly (1 to 20) alkylene (C2 to C20) oxide adduct (as the alkylene oxide, for example, ethylene oxide, propylene oxide, and butylene oxide) (meth)acrylates, and stearyl mono or poly (1 to 20) alkylene (C2 to C20) oxide adduct (as the alkylene oxide, for example, ethylene oxide and propylene oxide). Further, poly (1 to 20) alkylene (C2 to C20) oxide adduct (as the alkylene oxide, for example, ethylene oxide, propylene oxide, and butylene oxide) (meth)acrylate of butylphenol, octylphenol, nonylphenol, or dodecylphenol, and the like are exemplified.

Further, examples of the bifunctional modified acrylate include ethylene glycol mono or poly (1 to 20) alkylene (C2 to C20) oxide adduct (as the alkylene oxide, for example, ethylene oxide, propylene oxide, and butylene oxide) di(meth)acrylates, diethylene glycol mono or poly (2 to 20) alkylene (C2 to C20) oxide adduct (as the alkylene oxide, for example, ethylene oxide, propylene oxide, and butylene oxide) di(meth)acrylates, triethylene glycol poly (2 to 20) alkylene (C2 to C20) oxide adduct (as the alkylene oxide, for example, ethylene oxide, propylene oxide, and butylene oxide) di(meth)acrylates, polyethylene glycol poly (2 to 20) alkylene (C2 to C20) oxide adduct (as the alkylene oxide, for example, ethylene oxide, propylene oxide, and butylene oxide) di(meth)acrylates, propylene glycol poly (2 to 20) alkylene (C2 to C20) oxide adduct (as the alkylene oxide, for example, ethylene oxide, propylene oxide, and butylene oxide) di(meth)acrylates, dipropylene glycol poly (2 to 20) alkylene (C2 to C20) oxide adduct (as the alkylene oxide, for example, ethylene oxide, propylene oxide, and butylene oxide) di(meth)acrylates, tripropylene glycol poly (2 to 20) alkylene (C2 to C20) oxide adduct (as the alkylene oxide, for example, ethylene oxide, propylene oxide, and butylene oxide) di(meth)acrylates, polypropylene glycol poly (2 to 20) alkylene (C2 to C20) oxide adduct (as the alkylene oxide, for example, ethylene oxide, propylene oxide, and butylene oxide) di(meth)acrylates, butylene glycol poly (2 to 20) alkylene (C2 to C20) oxide adduct (as the alkylene oxide, for example, ethylene oxide, propylene oxide, and butylene oxide) di(meth)acrylates, pentyl glycol poly (2 to 20) alkylene (C2 to C20) oxide adduct (as the alkylene oxide, for example, ethylene oxide, propylene oxide, and butylene oxide) di(meth)acrylates, neopentyl glycol polyalkylene (C2 to C20) oxide adduct (as the alkylene oxide, for example, ethylene oxide, propylene oxide, butylene oxide, and the like) di(meth)acrylates, hydroxypivalyl hydroxypivalate poly (2 to 20) alkylene (C2 to C20) oxide adduct (as the alkylene oxide, for example, ethylene oxide, propylene oxide, and butylene oxide) di(meth)acrylates (commonly known as manda), hydroxypivalyl hydroxypivalate dicaprolactonate poly (2 to 20) alkylene (C2 to C20) oxide adduct (as the alkylene oxide, for example, ethylene oxide, propylene oxide, and butylene oxide) di(meth)acrylates, 1,6 hexanediol poly (2 to 20) alkylene (C2 to C20) oxide adduct (as the alkylene oxide, for example, ethylene oxide, propylene oxide, and butylene oxide) di(meth)acrylates, 1,6 hexanediol poly (2 to 20) alkylene oxide adduct (for example, ethylene oxide, propylene oxide, butylene oxide, and the like) di(meth)acrylates, 1,2-hexanediol di(meth)acrylate, 1,5-hexanediol poly (2 to 20) alkylene (C2 to C20) oxide adduct (as the alkylene oxide, for example, ethylene oxide, propylene oxide, and butylene oxide) di(meth)acrylates, 2,5-hexanediol poly (2 to 20) alkylene (C2 to C20) oxide adduct (as the alkylene oxide, for example, ethylene oxide, propylene oxide, and butylene oxide) di(meth)acrylates, 1,7-heptanediol poly (2 to 20) alkylene (C2 to C20) oxide adduct (as the alkylene oxide, for example, ethylene oxide, propylene oxide, and butylene oxide) di(meth)acrylates, 1,8-octanediol poly (2 to 20) alkylene (C2 to C20) oxide adduct (as the alkylene oxide, for example, ethylene oxide, propylene oxide, and butylene oxide) di(meth)acrylates, 1,2-octanediol poly (2 to 20) alkylene (C2 to C20) oxide adduct (as the alkylene oxide, for example, ethylene oxide, propylene oxide, and butylene oxide) di(meth)acrylate di(meth)acrylates, 1,9-nonanediol poly (2 to 20) alkylene (C2 to C20) oxide adduct (as the alkylene oxide, for example, ethylene oxide, propylene oxide, and butylene oxide) di(meth)acrylates, 1,2-decanediol poly (2 to 20) alkylene (C2 to C20) oxide adduct (as the alkylene oxide, for example, ethylene oxide, propylene oxide, and butylene oxide) di(meth)acrylates, 1,10-decanediol poly (2 to 20) alkylene (C2 to C20) oxide adduct (as the alkylene oxide, for example, ethylene oxide, propylene oxide, and butylene oxide) di(meth)acrylates, 1,2-decanediol poly (2 to 20) alkylene (C2 to C20) oxide adduct (as the alkylene oxide, for example, ethylene oxide, propylene oxide, and butylene oxide) di(meth)acrylates, 1,12-dodecanediol poly (2 to 20) alkylene (C2 to C20) oxide adduct (as the alkylene oxide, for example, ethylene oxide, propylene oxide, and butylene oxide) di(meth)acrylates, 1,2-dodecanediol mono or poly (1 to 20) alkylene (C2 to C20) oxide adduct (as the alkylene oxide, for example, ethylene oxide, propylene oxide, and butylene oxide) di(meth)acrylates, 1,14-tetradecanediol poly (2 to 20) alkylene (C2 to C20) oxide adduct (as the alkylene oxide, for example, ethylene oxide, propylene oxide, and butylene oxide) di(meth)acrylates, 1,2-tetradecanediol poly (2 to 20) alkylene (C2 to C20) oxide adduct (as the alkylene oxide, for example, ethylene oxide, propylene oxide, and butylene oxide) di(meth)acrylates, 1,16-hexadecanediol mono or poly (2 to 20) alkylene (C2 to C20) oxide adduct (as the alkylene oxide, for example, ethylene oxide, propylene oxide, and butylene oxide) di(meth)acrylates, 1,2-hexadecanediol poly (2 to 20) alkylene (C2 to C20) oxide adduct (as the alkylene oxide, for example, ethylene oxide, propylene oxide, and butylene oxide) di(meth)acrylates, 2-methyl-2,4-pentanediol poly (2 to 20) alkylene (C2 to C20) oxide adduct (as the alkylene oxide, for example, ethylene oxide, propylene oxide, and butylene oxide) di(meth)acrylates, 3-methyl-1,5-pentanediol poly (2 to 20) alkylene (C2 to C20) oxide adduct (as the alkylene oxide, for example, ethylene oxide, propylene oxide, and butylene oxide) di(meth)acrylates, 2-methyl-2-propyl-1,3-propanediol poly (2 to 20) alkylene (C2 to C20) oxide adduct (as the alkylene oxide, for example, ethylene oxide, propylene oxide, and butylene oxide) di(meth)acrylates, 2,4-dimethyl-2,4-pentanediol poly (2 to 20) alkylene (C2 to C20) oxide adduct (as the alkylene oxide, for example, ethylene oxide, propylene oxide, and butylene oxide) di(meth)acrylates, 2,2-diethyl-1,3-propanediol mono or poly (2 to 20) alkylene (C2 to C20) oxide adduct (as the alkylene oxide, for example, ethylene oxide, propylene oxide, and butylene oxide) di(meth)acrylates, 2,2,4-trimethyl-1,3-pentanediol mono or poly (2 to 20) alkylene (C2 to C20) oxide adduct (as the alkylene oxide, for example, ethylene oxide, propylene oxide, and butylene oxide) di(meth)acrylates, dimethylol octanepoly (2 to 20) alkylene (C2 to C20) oxide adduct (as the alkylene oxide, for example, ethylene oxide, propylene oxide, and butylene oxide) di(meth)acrylates, 2-ethyl-1,3-hexanediol poly (2 to 20) alkylene (C2 to C20) oxide adduct (as the alkylene oxide, for example, ethylene oxide, propylene oxide, and butylene oxide) di(meth)acrylates, 2,5-dimethyl-2,5-hexanediol poly (2 to 20) alkylene (C2 to C20) oxide adduct (as the alkylene oxide, for example, ethylene oxide, propylene oxide, and butylene oxide) di(meth)acrylates, 2-methyl-1,8-octanediol poly (2 to 20) alkylene (C2 to C20) oxide adduct (as the alkylene oxide, for example, ethylene oxide, propylene oxide, and butylene oxide) di(meth)acrylates, 2-butyl-2-ethyl-1,3-propanediol poly (2 to 20) alkylene (C2 to C20) oxide adduct (as the alkylene oxide, for example, ethylene oxide, propylene oxide, and butylene oxide) di(meth)acrylates, 2,4-diethyl-1,5-pentanediol poly (2 to 20) alkylene (C2 to C20) oxide adduct (as the alkylene oxide, for example, ethylene oxide, propylene oxide, and butylene oxide) di(meth)acrylates, and as modified acrylates of bisphenol, bisphenol A tetraethylene oxide adduct di(meth)acrylates, bisphenol F tetraethylene oxide adduct di(meth)acrylates, bisphenol S tetra ethylene oxide adduct di(meth)acrylates, hydrogenated bisphenol A tetraethylene oxide adduct di(meth)acrylates, hydrogenated bisphenol F tetraethylene oxide adduct di(meth)acrylates, hydrogenated bisphenol A di(meth)acrylates, hydrogenated bisphenol F di(meth)acrylates, bisphenol A tetraethylene oxide adduct dicaprolactonate di(meth)acrylates, and bisphenol F tetraethylene oxide adduct dicaprolactonate di(meth)acrylates.

Examples of the trifunctional modified acrylate include glycerol poly (2 to 20) alkylene (C2 to C20) oxide adduct (as the alkylene oxide, for example, ethylene oxide, propylene oxide, and butylene oxide) tri(meth) acrylates, trimethylolpropane poly (2 to 20) alkylene (C2 to C20) oxide adduct (as the alkylene oxide, for example, ethylene oxide, propylene oxide, and butylene oxide) tri(meth)acrylates, trimethylolethane poly (2 to 20) alkylene (C2 to C20) oxide adduct (as the alkylene oxide, for example, ethylene oxide, propylene oxide, and butylene oxide) tri(meth)acrylates, trimethylolhexane poly (2 to 20) alkylene (C2 to C20) oxide adduct (as the alkylene oxide, for example, ethylene oxide, propylene oxide, and butylene oxide) tri(meth)acrylates, trimethyloloctane poly (2 to 20) alkylene (C2 to C20) oxide adduct (as the alkylene oxide, for example, ethylene oxide, propylene oxide, and butylene oxide) tri(meth)acrylates, trimethyloloctane poly (3 to 20) alkylene (C2 to C20) oxide adduct (as the alkylene oxide, for example, ethylene oxide, propylene oxide, and butylene oxide) tri(meth)acrylates, and pentaerythritol poly (2 to 20) alkylene (C2 to C20) oxide adduct (as the alkylene oxide, for example, ethylene oxide, propylene oxide, and butylene oxide) tri(meth)acrylates.

Examples of the tetra or higher functional modified acrylate include, but are not limited to, pentaerythritol poly (2 to 20) alkylene (C2 to C20) oxide adduct (as the alkylene oxide, for example, ethylene oxide, propylene oxide, and butylene oxide) tetra(meth)acrylates, ditrimethylolpropane poly (2 to 20) alkylene (C2 to C20) oxide adduct (as the alkylene oxide, for example, ethylene oxide, propylene oxide, and butylene oxide) tetra(meth)acrylates, ditrimethylolpropane poly (2 to 20) alkylene oxide (for example, ethylene oxide, propylene oxide, butylene oxide, and the like) tetra(meth)acrylates, ditrimethylolpropane tetracaprolactonate, tetra(meth)acrylate, ditrimethylolethane poly (2 to 20) alkylene (C2 to C20) oxide adduct (as the alkylene oxide, for example, ethylene oxide, propylene oxide, and butylene oxide) tetra(meth)acrylates, ditrimethylolethane poly (2 to 20) alkylene oxide (for example, ethylene oxide, propylene oxide, butylene oxide, and the like) tetra(meth)acrylates, ditrimethylolbutane poly (2 to 20) alkylene oxide (for example, ethylene oxide, propylene oxide, butylene oxide, and the like) tetra(meth)acrylates, ditrimethylolhexane poly (2 to 20) alkylene (C2 to C20) oxide adduct (as the alkylene oxide, for example, ethylene oxide, propylene oxide, and butylene oxide) tetra(meth)acrylates, ditrimethylolhexane poly (2 to 20) alkylene oxide (for example, ethylene oxide, propylene oxide, butylene oxide, and the like) tetra(meth)acrylates, ditrimethyloloctane (2 to 20) alkylene (C2 to C20) oxide adduct (as the alkylene oxide, for example, ethylene oxide, propylene oxide, and butylene oxide) tetra (meth)acrylates, ditrimethyloloctane poly (4 to 200) alkylene oxide (for example, ethylene oxide, propylene oxide, butylene oxide, and the like) tetra (meth)acrylates, dipentaerythritol poly (5 to 20) alkylene (C2 to C20) oxide adduct (as the alkylene oxide, for example, ethylene oxide, propylene oxide, and butylene oxide) penta (meth)acrylates, dipentaerythritol poly (2 to 20) alkylene (C2 to C20) oxide adduct (as the alkylene oxide, for example, ethylene oxide, propylene oxide, and butylene oxide) hexa (meth)acrylates, propylene oxide, butylene oxide, and the like) hexa (meth)acrylates, dipentaerythritol hexacaprolactonate poly (2 to 20) alkylene (C2 to C20) oxide adduct (as the alkylene oxide, for example, ethylene oxide, propylene oxide, and butylene oxide) hexa(meth)acrylates, tripentaerythritol poly (2 to 20) alkylene (C2 to C20) oxide adduct (as the alkylene oxide, for example, ethylene oxide, propylene oxide, and butylene oxide) hepta(meth)acrylates, tripentaerythritol poly (2 to 20) alkylene (C2 to C20) oxide adduct (as the alkylene oxide, for example, ethylene oxide, propylene oxide, and butylene oxide) octa(meth) acrylates, tripentaerythritol poly (2 to 20) alkylene (C2 to C20) oxide adduct (as the alkylene oxide, for example, ethylene oxide, propylene oxide, and butylene oxide) hexa(meth) acrylates, tripentaerythritol polyalkylene oxide hepta(meth)acrylate, and tripentaerythritol poly (2 to 20) alkylene (C2 to C20) oxide adduct (as the alkylene oxide, for example, ethylene oxide, propylene oxide, and butylene oxide) octa(meth)acrylates.

Furthermore, as the compound containing a (meth)acryloyl group, a photocurable (meth)acrylic oligomer, urethane (meth)acrylate, epoxy (meth)acrylate, and polyester (meth)acrylate can be appropriately used.

Examples of the oligomer include a polyol, an esterified product of a polybasic acid and a (meth)acrylic acid, and an epoxy acrylate. Examples of the polyol include ethylene glycol, glycerol, trimethylolpropane, and pentaerythritol, and examples of the polybasic acid include phthalic anhydride, isophthalic acid, (anhydrous) succinic acid, (anhydrous) maleic acid, adipic acid, and sebacic acid. The ester reaction of the polyol, the polybasic acid, and the (meth)acrylic acid is performed by a conventional method.

Examples of the urethane (meth)acrylate include general aromatic or aliphatic urethane (meth)acrylates. Examples thereof include (meth)acrylates of tolylene diisocyanate, hexamethylene diisocyanate, isophorone diisocyanate, and the like.

Examples of the epoxy (meth)acrylate include general aromatic or aliphatic epoxy (meth)acrylates. Examples thereof include (meth)acrylates of bisphenol A epoxy, bisphenol F epoxy, novolac epoxy, and phosphoric acid-based epoxy, and the like.

Examples of the polyester (meth)acrylate include general polyester (meth)acrylate, fatty acid-modified type polyester, and chlorinated polyester.

As the monomer having a radically polymerizable double bond in the photocurable resin composition of the second aspect, a bifunctional acrylate, a trifunctional acrylate, a tetra or higher functional acrylate, and a trifunctional modified acrylate are preferable.

The content of the monomer having a radically polymerizable double bond in the resin composition of the second aspect is preferably 40 to 90 mass%, and more preferably 50 to 90 mass%.

### 2-5. Photopolymerization initiator

The photocurable resin composition of the second aspect contains a photopolymerization initiator.

The examples of the photopolymerization initiator are not particularly limited as long as it can initiate polymerization of a monomer having a radically polymerizable double bond, and include the same photopolymerization initiators as those exemplified in the section "1-5. Other additives" of the first aspect.

In the second aspect, preferred examples of the photopolymerization initiator include 2,2-dimethoxy-2-phenylacetophenone, 1-hydroxy-cyclohexyl-phenyl ketone, 2-hydroxy-2-methyl-1-phenyl propanone, 2-methyl-1-[4-(methylthio)phenyl]-2-morpholinopropane-1-one, 2-dimethylamino-2-(4-methylbenzyl)-1-(4-morpholine-4-yl-phenyl)-butane-1-one, 2-benzyl-2-dimethylamino-1-(4-morpholinophenyl)-butanone-1, 2,4,6-trimethylbenzoyldiphenylphosphine oxide, and bis(2,4,6-trimethylbenzoyl)-phenylphosphine oxide, from the viewpoint of suitably obtaining an ink or a coating material excellent in drying property, scratch resistance, and adhesion to a base material, and most preferred examples include 2-methyl-1-[4-(methylthio)phenyl]-2-morpholinopropane-1-one, 2-dimethylamino-2-(4-methylbenzyl)-1-(4-morpholine-4-yl-phenyl)-butane-1-one, and 2,4,6-trimethylbenzoyldiphenylphosphine oxide, from the viewpoint of exerting particularly excellent drying property.

The amount of the photopolymerization initiator contained in the photocurable resin composition is preferably in a range of 0.1 to 15 mass%, more preferably in a range of 0.5 to 12 mass%, and still more preferably in a range of 1 to 12 mass% with respect to the entire photocurable resin composition.

### 2-6. Other Additives

The photocurable resin composition of the second aspect can further contain, according to the purpose, a sensitizer (for example, an amine-based sensitizer such as triethanolamine), various additives such as a stabilizer (for example, a polymerization inhibitor such as hydroquinone and methoquinone), a colorant such as a pigment, a filler, and a viscosity modifier. Specific examples of the pigment include various known pigments including inorganic pigments such as chrome yellow, zinc yellow, Prussian blue, barium sulfate, cadmium red, titanium oxide, zinc oxide, red iron oxide, alumina white, calcium carbonate, ultramarine blue, carbon black, graphite, aluminum powder, and red oxide; and organic pigments such as soluble azo pigments such as β-naphthol-based, β-oxynaphthoic acid-based, β-oxynaphthoic acid anilide-based, acetoacetanilide-based, and pyrazolone-based pigments, insoluble azo pigments such as β-naphthol-based, acetoacetanilide-based monoazo, acetoacetanilide-based disazo, and pyrazolone-based pigments, phthalocyanine pigments such as copper phthalocyanine blue, halogenated (chlorinated or brominated) copper phthalocyanine blue, sulfonated copper phthalocyanine blue, and metal free phthalocyanine pigments, and polycyclic pigments and heterocyclic pigments such as quinacridone-based, dioxazine-based, threne-based (for example, pyranthrone, anthanthrone, indanthrone, anthrapyrimidine, flavanthrone, thioindigo-based, anthraquinone-based, perinone-based, and perylene-based pigments), isoindolinone-based, metal complex-based, and quinophthalone-based pigments.

Examples of the amounts of the stabilizer, the sensitizer, and the colorant include the same amounts as those described in "1-5. Other additives" of the first aspect.

### 2-7. Method for producing photocurable resin composition and use thereof

The photocurable resin composition of the second aspect can be produced by adding a styrene-acrylate copolymer to a monomer having a radically polymerizable double bond, and mixing a photopolymerization initiator, and if necessary, a sensitizer and an additive (for example, a stabilizer, and a pigment) thereto. The photocurable resin composition of the second aspect is cured by irradiation with light. The light used for curing is generally ultraviolet rays. In the case of ultraviolet irradiation, mercury free has been strongly desired from the viewpoint of environmental protection, and replacement with a GaN-based semiconductor ultraviolet light-emitting device is very useful in industrial and environmental respects. Furthermore, an ultraviolet light-emitting diode (UV-LED) and an ultraviolet laser diode (UV-LD) are compact, have a long life, have high efficiency, and are produced at low cost, and thus are preferable as an ultraviolet ray light source.

The method for producing the photocurable resin composition of the second aspect is not particularly limited, and is the same as the description in "1-6. Method for producing photocurable resin composition and use thereof" of the first aspect.

### 3. Third aspect

The photocurable resin composition of the third aspect contains a styrene-acrylate copolymer, a monomer having a radically polymerizable double bond, and a photopolymerization initiator, and a sensitizer, wherein, in the styrene-acrylate copolymer, the proportion of a constituent unit (A) derived from a styrene-based compound is 10 to 90 mol%, and the proportion of a constituent unit (B) derived from an acrylate compound is 10 to 90 mol%, and the constituent unit (B) derived from an acrylate compound contains a constituent unit (b-1) derived from a compound having at least three (meth)acryloyl groups in the molecule.

### 3-1. Styrene-acrylate copolymer

In the photocurable resin composition of the third aspect, the description regarding the styrene-acrylate copolymer is the same as the description in the section "1-1. Styrene-acrylate copolymer" of the first aspect.

### 3-2. Constituent unit (A) derived from styrene-based compound

In the photocurable resin composition of the third aspect, the description regarding the constituent unit (A) derived from a styrene-based compound is the same as the description in the section "1-2. Constituent unit (A) derived from styrene-based compound" of the first aspect.

### 3-3. Constituent unit (B) derived from acrylate compound

In the photocurable resin composition of the third aspect, the description regarding the constituent unit (B) derived from an acrylate compound is the same as the description in the section "1-3. Constituent unit (B) derived from acrylate compound" of the first aspect.

### 3-4. Monomer having radically polymerizable double bond

In the photocurable resin composition of the third aspect, the description regarding the monomer having a radically polymerizable double bond is the same as the description in the section "2-4. Monomer having radically polymerizable double bond" of the second aspect.

### 3-5. Photopolymerization initiator

The photocurable resin composition of the third aspect contains a photocurable resin composition.

In the third aspect, examples of the photopolymerization initiator are not particularly limited, but include the same photopolymerization initiators as those exemplified in the section "2-5. Photopolymerization initiator" of the second aspect.

In the third aspect, particularly, acetophenones, α-aminoalkylphenones, and acylphosphine oxides are preferable. These photopolymerization initiators may be used alone, or two or more thereof may be used in combination. Furthermore, it is also possible to use a photopolymerization initiator and a sensitizer in combination.

The amount of the photopolymerization initiator contained in the photocurable resin composition is preferably in a range of 0.1 to 15 mass%, more preferably in a range of 0.5 to 12 mass%, and still more preferably in a range of 1 to 12 mass% with respect to the entire photocurable resin composition.

3-6. Sensitizer

The photocurable resin composition of the third aspect contains a sensitizer.

Examples of the sensitizer include, but are not particularly limited to, benzophenones, unsaturated ketones typified by chalcones and dibenzalacetone, and the like, 1,2-diketones typified by benzyl, camphorquinone, and the like, benzoins, fluorenes, naphthoquinones, anthraquinones, xanthenes, thioxanthenes, xanthones, thioxanthones, coumarins, ketocoumarins, polymethine dyes such as cyanines, merocyanines, and oxonols, acridines, azines, thiazines, oxazines, indolines, azulenes, azuleniums, squaryliums, porphyrins, tetraphenylporphyrins, triarylmethanes, tetrabenzoporphyrins, tetrapyrazinoporphyrazines, phthalocyanines, tetraazaporphyrazines, tetraquinoxalyloporphyrazines, naphthalocyanines, subphthalocyanines, pyryliums, thiopyryliums, tetraphyllines, annulenes, spiropyrans, spirooxazines, thiospiropyrans, metal arene complexes, and organic ruthenium complexes, from the viewpoint of drying property, scratch resistance, and adhesion to a base material.

From the viewpoint of drying property, scratch resistance, and adhesion to a base material, preferred specific examples thereof include 2,5-bis(4-diethylaminobenzal)cyclopentanone, 2,6-bis(4-dimethylaminobenzal)cyclohexanone, 2,6-bis(4-dimethylaminobenzal)-4-methylcyclohexanone, Michler's ketone, 4,4-bis(dimethylamino)chalcone, 4,4-bis(diethylamino)chalcone, p-dimethylaminocinnamylidene indanone, p-dimethylaminobenzylidene indanone, 2-(p-dimethylaminophenylvinylene)-isonaphthothiazole, 1,3-bis(4-dimethylaminobenzal)acetone, 1,3-carbonyl-bis(4-diethylaminobenzal)acetone, 3,3-carbonyl-bis(7-diethylaminocoumarin), N-phenyl-N-ethylethanolamine, N-phenylethanolamine, N-tolyldiethanolamine; p-dimethylaminobenzoic acid alkyl esters such as p-dimethylaminobenzoic acid methyl ester, p-dimethylaminobenzoic acid ethyl ester, p-dimethylaminobenzoic acid butyl ester, p-dimethylaminobenzoic acid butoxyethyl ester, and p-dimethylaminobenzoic acid isoamyl ester; and p-diethylaminobenzoic acid alkyl esters such as p-diethylaminobenzoic acid methyl ester, p-diethylaminobenzoic acid ethyl ester, and p-diethylaminobenzoic acid isoamyl. In addition, thioxanthones such as thioxanthone, 2-isopropylthioxanthone, 2-chlorothioxanthone, 2,4-dimethylthioxanthone, 2,4-diethylthioxanthone, and 2,4-diisopropylthioxanthone, and benzophenones such as 4,4'-bis-(diethylamino)benzophenone can be exemplified. Among them, from the viewpoint of particularly enhancing drying property, p-dimethylaminobenzoic acid alkyl ester, p-dimelaminobenzoic acid alkyl ester, thioxanthones, and benzophenones are preferable, and 4,4'-bis-(diethylamino)benzophenone, 2,4-diethylthioxanthone, and p-dimethylaminobenzoic acid ethyl ester are more preferable.

In the third aspect, the amount of the sensitizer contained in the photocurable resin composition is preferably in a range of 0.1 to 10 mass%, more preferably in a range of 0.1 to 5 mass%, and still more preferably in a range of 0.5 to 5 mass% with respect to the entire photocurable resin composition from the viewpoint of drying property, scratch resistance, and adhesion to a base material.

### 3-7. Other Additives

The photocurable resin composition of the third aspect can further contain various additives exemplified in the first aspect and the second aspect according to the purpose.

In the third aspect, examples of the amounts of the stabilizer and the colorant include the same amounts as those described in "1-5. Other additives" of the first aspect.

### 3-8. Method for producing photocurable resin composition and use thereof

The photocurable resin composition of the third aspect can be produced by adding a styrene-acrylate copolymer to a monomer having a radically polymerizable double bond, and mixing a photopolymerization initiator, a sensitizer, and, if necessary, an additive (for example, a stabilizer, and a pigment) thereto. The photocurable resin composition of the third aspect is cured by irradiation with light. The light used for curing is generally ultraviolet rays. In the case of ultraviolet irradiation, mercury free has been strongly desired from the viewpoint of environmental protection, and replacement with a GaN-based semiconductor ultraviolet light-emitting device is very useful in industrial and environmental respects. Furthermore, an ultraviolet light-emitting diode (UV-LED) and an ultraviolet laser diode (UV-LD) are compact, have a long life, have high efficiency, and are produced at low cost, and thus are preferable as an ultraviolet ray light source.

The method for producing the photocurable resin composition of the third aspect is not particularly limited, and is the same as the description in "1-6. Method for producing photocurable resin composition and use thereof' of the first aspect.

### EXAMPLES

Hereinafter, the first aspect, the second aspect, and the third aspect of the present invention will be described in more detail with reference to Examples, but the following Examples do not limit the scope of rights of the present invention at all. In the present invention, "part" represents "part by mass", and "%" represents "mass%".

### Method for measuring mass average molecular weight (Mw), number average molecular weight (Mn), and molecular weight distribution (Mw/Mn) of styrene-acrylate copolymer

The mass average molecular weight (Mw), the number average molecular weight (Mn), and the molecular weight distribution (Mw/Mn) of the styrene-acrylate copolymer were measured using Gel Permeation Chromatography (GPC). Mw and Mn are values of mass average molecular weight and number average molecular weight in terms of standard polystyrene.
Column: Shodex LF-804 × 2 columns are connected in series.
Flow rate: 1.0 mL/min
Temperature: 40°C
Detector: RID-20A
Sample: 20 mg of a sample was dissolved in 10 mL of tetrahydrofuran to prepare a sample for measurement.

### Measurement of iodine value

The iodine value of the styrene-acrylate copolymer used in the production was measured according to the method defined in JIS K6235.

### (Synthesis Example 1A) styrene-acrylate copolymer (copolymer 1A)

Into a four-necked flask equipped with a stirrer, a reflux condenser, a thermometer, and a dropping funnel, 130 g of mesitylene was added and heated to 160°C with stirring. A mixture of 16 g of styrene, 12 g of benzyl acrylate, 14 g of 2-ethylhexyl acrylate, 22 g of trimethylolpropane triacrylate, and 5 g of tert-butylperoxybenzoate was added dropwise to the reaction vessel over 6 hours. Thereafter, the styrene-acrylate copolymer was subjected to a polymerization reaction for 30 minutes, and then cooled to room temperature. The obtained polymerization solution was treated with a 10-fold amount of hexane to remove unreacted acrylate, and dried at 80°C under reduced pressure to obtain copolymer 1A. (Yield: 60%, mass average molecular weight: 27,000, number average molecular weight: 5,500, molecular weight distribution: 4.9, iodine value: 10). Copolymer 1A is a styrene-acrylate copolymer in which the proportion of the constituent unit (A) derived from a styrene-based compound is 10 to 90 mol%, the proportion of the constituent unit (B) derived from an acrylate compound is 10 to 90 mol%, and the constituent unit (B) derived from an acrylate compound contains the structural unit (b-1) derived from a compound having at least three (meth)acryloyl groups in the molecule.

### (Synthesis Example 2A) styrene-acrylate copolymer (copolymer 2A)

Into a four-necked flask equipped with a stirrer, a reflux condenser, a thermometer, and a dropping funnel, 130 g of mesitylene was added and heated to 160°C with stirring. A mixture of 16 g of styrene, 13 g of benzyl acrylate, 15 g of 2-ethylhexyl acrylate, 18 g of 1,6-hexanediol diacrylate, and 5 g of tert-butylperoxybenzoate was added dropwise to the reaction vessel over 6 hours. Thereafter, the styrene-acrylate copolymer was subjected to a polymerization reaction for 30 minutes, and then cooled to room temperature. The obtained polymerization solution was treated with a 10-fold amount of hexane to remove unreacted acrylate, and dried at 80°C under reduced pressure to obtain copolymer 2A. (Yield: 60%, mass average molecular weight: 29,000, number average molecular weight: 11,000, molecular weight distribution: 2.6, iodine value: 5). Copolymer 2A is a styrene-acrylate copolymer in which the proportion of the constituent unit (A) derived from a styrene-based compound is 10 to 90 mol% and the proportion of the constituent unit (B) derived from an acrylate compound is 10 to 90 mol%, but the constituent unit (B) derived from an acrylate compound does not contain the constituent unit (b-1) derived from a compound having at least three (meth)acryloyl groups in the molecule.

### (Examples)

A photocurable resin composition having each composition described in the following Table 1A was prepared, and each characteristic was evaluated.

### (Examples 1A to 10A and Comparative Examples 1A to 7A)

### 1A) Evaluation of solubility (compatibility) of active energy ray curable composition

Each component described in Table 1A was heated and mixed at 90°C for 2 hours to prepare an active energy ray curable composition. Each composition was cooled to room temperature (25°C), and solubility (compatibility between the styrene-acrylate copolymer and the ethylenically unsaturated compound) was evaluated based on whether the appearance after elapse of one night was transparent. The sample whose appearance was transparent even after cooling was evaluated as ○, and the sample whose appearance was cloudy was evaluated as ×. The evaluation results are shown in Table 1A.

### 2A) Drying property test

An active energy ray curable composition prepared from each component described in Table 1A was coated on a piece of one-side coated art paper (art paper, manufactured by Oji Paper Co., Ltd.) using an RI tester, and cured with a metal halide lamp (lamp distance: 11 cm, conveyor speed: 100 m/min) having an output of 80 W/cm. As the UV curing apparatus, a conveyor type ultraviolet curing apparatus manufactured by Eye Graphics Co., Ltd. was used. The sample was passed a plurality of times until no fingerprint was left on the surface (tack free) when the coating film was touched with a finger. The case where the number of times of passage was 5 or less was evaluated as ○, and the case where the number of times of passage was 6 or more was evaluated as ×.

### 3A) Scratch property test

An active energy ray curable composition prepared from each component described in Table 1A was coated on a piece of one-side coated art paper in the same manner as in the drying property test, and cured. The surface of the obtained coating film was rubbed with a nail to confirm the surface state. The case where the coating film exhibited no change or the coating film was scraped while resisting was evaluated as ○, and the case where the coating film was easily scraped was evaluated as ×. The evaluation results are shown in Table 1A.

**[Table 1A]**

| | | Example 1A | Example 2A | Example 3A | Example 4A | Copmarative Example 1A | Copmarative Example 2A | Copmarative Example 3A | Example 5A | Copmarative Example 4A | Example 6A | Example 7A | Example 8A | Copmarative Example 5A | Example 9A | Copmarative Example 6A | Example 10A | Copmarative Example 7A |
|---|---|---|---|---|---|---|---|---|---|---|---|---|---|---|---|---|---|---|
| Resin | Copolymer 1A | 30 | 30 | 10 | 40 | | | | 30 | | 30 | 30 | 30 | | 30 | | 30 | |
| | Copolymer 2A | | | | | 30 | | | | | | | | | | | | |
| | U-2PPA*1 | | | | | | 30 | | | 30 | | | | 30 | | 30 | | 30 |
| | VS1063*2 | | | | | | | 30 | | | | | | | | | | |
| Ethylenically unsaturated compound | DPHA*3 | 70 | | | | | | | | | | | | | | | | |
| | DTMPTA*4 | | 70 | 90 | 60 | 70 | 70 | 70 | | | | | | | | | | |
| | 3EO-TMPTA*5 | | | | | | | | 70 | 70 | | | | | | | | |
| | 3PO-TMPTA*6 | | | | | | | | | | 70 | | | | | | | |
| | TMPTA*7 | | | | | | | | | | | 70 | | | | | | |
| | TPGDA*8 | | | | | | | | | | | | 70 | 70 | | | | |
| | GPTA*9 | | | | | | | | | | | | | | 70 | 70 | | |
| | HDDA*19 | | | | | | | | | | | | | | | | 70 | 70 |
| Photopolymerization initiator | Omnirad 907*11 | 5 | 5 | 5 | 5 | 5 | 5 | 5 | 5 | 5 | 5 | 5 | 5 | 5 | 5 | 5 | 5 | 5 |
| Solubility | | ○ | ○ | ○ | ○ | ○ | ○ | × | ○ | ○ | ○ | ○ | ○ | ○ | ○ | ○ | ○ | ○ |
| Drying property | | ○ | ○ | ○ | ○ | × | × | - | ○ | × | ○ | ○ | ○ | × | ○ | × | ○ | × |
| Scratch property | | ○ | ○ | ○ | ○ | ○ | ○ | - | ○ | ○ | ○ | ○ | ○ | ○ | ○ | ○ | ○ | ○ |

Components other than copolymers 1A and 2A shown in Table 1A are as follows.

The composition amounts shown in Table 1A are expressed in parts by mass.
^{∗}1: U-2PPA: urethane acrylate, manufactured by Shin-Nakamura Chemical Co., Ltd.
^{∗}2: VS-1063: polystyrene resin, manufactured by Seiko PMC Corporation.
^{∗}3: DPHA: Aronix M-404 dipentaerythritol hexaacrylate, manufactured by Toagosei Co., Ltd.
^{∗}4: DTMPTA: MIRAMER M410 ditrimethylolpropane tetraacrylate, manufactured by Miwon Specialty Chemical Co., Ltd.
^{∗}5: 3EO-TMPTA: MIRAMER M3130 ethylene oxide-modified trimethylolpropane triacrylate, manufactured by Miwon Specialty Chemical Co., Ltd.
^{∗}6: 3PO-TMPTA: SR492TFN propylene oxide-modified trimethylolpropane triacrylate, manufactured by Sartomer Company Inc.
^{∗}7: TMPTA: MIRAMER M300 trimethylolpropane triacrylate, manufactured by Miwon Specialty Chemical Co., Ltd.
^{∗}8: TPGDA: SR306H tripropylene glycol diacrylate, manufactured by Sartomer Company Inc.
^{∗}9: GPTA: MIRAMER M320 propylene oxide-modified glycerol triacrylate, manufactured by Miwon Specialty Chemical Co., Ltd.
^{∗}10: HDDA: SR238NS 1,6-hexanediol diacrylate, manufactured by Sartomer Company Inc.
^{∗}11: Omnirad 907: 2-methyl-1-[4-(methylthio)phenyl]-2 morpholinopropane-1-one, manufactured by IGM Resins B.V.

Table 1A shows that the photocurable resin composition containing the styrene-acrylate copolymer of the first aspect is excellent in compatibility, drying property, and scratch resistance even when various acrylates are used.

### (Synthesis Example 1B) styrene-acrylate copolymer (copolymer 1B)

Into a four-necked flask equipped with a stirrer, a reflux condenser, a thermometer, and a dropping funnel, 130 g of mesitylene was added and heated to 160°C with stirring. A mixture of 16 g of styrene, 12 g of benzyl acrylate, 14 g of 2-ethylhexyl acrylate, 22 g of trimethylolpropane triacrylate, and 5 g of tert-butylperoxybenzoate was added dropwise to the reaction vessel over 6 hours. Thereafter, the styrene-acrylate copolymer was subjected to a polymerization reaction for 30 minutes, and then cooled to room temperature. The obtained polymerization solution was treated with a 10-fold amount of hexane to remove unreacted acrylate, and dried at 80°C under reduced pressure to obtain copolymer 1B. (Yield: 60%, weight average molecular weight: 27,000, number average molecular weight: 5,500, molecular weight distribution: 4.9, iodine value: 10)

### (Examples)

A photocurable resin composition having each composition described in the following Table 1B was prepared, and each characteristic was evaluated.

### (Examples 1B to 10B and Comparative Examples 1B to 6B)

### 1B) Drying property test

An active energy ray curable composition prepared from each component described in Table 1B was coated on a piece of one-side coated art paper (art paper, manufactured by Oji Paper Co., Ltd.) using an RI tester, and cured with a metal halide lamp (lamp distance: 11 cm, conveyor speed: 100 m/min) having an output of 80 W/cm. Note that, as the UV curing apparatus, a conveyor type ultraviolet curing apparatus manufactured by Eye Graphics Co., Ltd. was used. The sample was passed a plurality of times until no fingerprint was left on the surface (tack free) when the coating film was touched with a finger. The case where the number of times of passage was 3 or less was evaluated as ⊙, the case where the number of times of passage was 4 or 5 was evaluated as ○, and the case where the number of times of passage was 6 or more was evaluated as ×. The evaluation results are shown in Table 1B.

### 2B) Scratch property test

An active energy ray curable composition prepared from each component described in Table 1B was coated on a piece of one-side coated art paper in the same manner as in the drying property test, and cured. The surface of the obtained coating film was rubbed with a nail to confirm the surface state. The case where the coating film exhibited no change or the coating film was scraped while resisting was evaluated as ○, and the case where the coating film was easily scraped was evaluated as ×. The evaluation results are shown in Table 1B.

**Table 1B**

| | | Example 1B | Comparative Example 1B | Example 2B | Comparative Example 2B | Example 3B | Comparative Example 3B | Example 4B | Comparative Example 4B | Example 5B | Comparative Example 5B | Example 6B | Comparative Example 6B | Example 7B | Example 8B | Example 9B | Example 10B |
|---|---|---|---|---|---|---|---|---|---|---|---|---|---|---|---|---|---|
| Resin | Copolymer 1B | 20 | | 20 | | 20 | | 20 | | 20 | | 20 | | 20 | 20 | 20 | 20 |
| | U-2PPA*1 | | 20 | | 20 | | 20 | | 20 | | 20 | | 20 | | | | |
| Monomer | DPHA*2 | 80 | 80 | 80 | 80 | 80 | 80 | 80 | 80 | 80 | 80 | 80 | 80 | 80 | 80 | 80 | 80 |
| Photopolymerization initiator | Omnirad 907*3 | 5 | 5 | | | | | | | | | | | | | | |
| | Omnirad 379*4 | | | 5 | 5 | | | | | | | | | 2 | 10 | | |
| | Omnirad TPO*5 | | | | | 5 | 5 | | | | | | | | | 2 | 10 |
| | Omnirad 184*6 | | | | | | | 5 | 5 | | | | | | | | |
| | Omnirad 651*7 | | | | | | | | | 5 | 5 | | | | | | |
| | Omnirad 1173*8 | | | | | | | | | | | 5 | 5 | | | | |
| Drying property | | ⊙ | ○ | ⊙ | × | ⊙ | ○ | ○ | × | ○ | × | ○ | × | ○ | ⊙ | ○ | ⊙ |
| Scratch property | | ○ | ○ | ○ | ○ | ○ | ○ | ○ | ○ | ○ | ○ | ○ | ○ | ○ | ○ | ○ | ○ |

Components other than copolymer 1B shown in Table 1B are as follows. The composition amounts shown in Table 1B are expressed in parts by mass.
^{∗}1: U-2PPA: urethane acrylate, manufactured by Shin-Nakamura Chemical Co., Ltd.
^{∗}2: DPHA: Aronix M-404 dipentaerythritol hexaacrylate, manufactured by Toagosei Co., Ltd.
^{∗}3: Omnirad 907: 2-methyl-1-[4-(methylthio)phenyl]-2-morpholinopropane -1-one, manufactured by IGM Resins B.V.
^{∗}4: Omnirad 379: 2-dimethylamino-2-(4-methylbenzyl)-1-(4-morpholine-4-yl-phenyl)-butane-1-one, manufactured by IGM Resins B.V.
^{∗}5: Omnirad TPO: 2,4,6-trimethylbenzoyldiphenylphosphine oxide, manufactured by IGM Resins B.V.
^{∗}6: Omnirad 184: 1-hydroxycyclohexyl phenyl ketone, manufactured by IGM Resins B.V.
^{∗}7: Omnirad 651: 2,2-dimethoxy-2-phenylacetophenone, manufactured by IGM Resins B.V.
^{∗}8: Omnirad 1173: 2-hydroxy-2-methyl-1-phenylpropanone, manufactured by IGM Resins B.V.

Table 1B reveals that the photocurable resin composition containing the styrene-acrylate copolymer of the second aspect and various photopolymerization initiators has excellent drying property and scratch resistance. Among them, a combination of a styrene-acrylate copolymer and Omnirad 907, a combination of a styrene-acrylate copolymer and Omnirad 379, and a combination of a styrene-acrylate copolymer and Omnirad TPO exhibited particularly excellent drying property.

### (Synthesis Example 1C) styrene-acrylate copolymer (copolymer 1C)

Into a four-necked flask equipped with a stirrer, a reflux condenser, a thermometer, and a dropping funnel, 130 g of mesitylene was added and heated to 160°C with stirring. A mixture of 16 g of styrene, 12 g of benzyl acrylate, 14 g of 2-ethylhexyl acrylate, 22 g of trimethylolpropane triacrylate, and 5 g of tert-butylperoxybenzoate was added dropwise to the reaction vessel over 6 hours. Thereafter, the styrene-acrylate copolymer was subjected to a polymerization reaction for 30 minutes, and then cooled to room temperature. The obtained polymerization solution was treated with a 10-fold amount of hexane to remove unreacted acrylate, and dried at 80°C under reduced pressure to obtain copolymer 1C. (Yield: 60%, mass average molecular weight: 27,000, number average molecular weight: 5,500, molecular weight distribution: 4.9, iodine value: 10)

### (Examples)

A photocurable resin composition having each composition described in the following Table 1C was prepared, and each characteristic was evaluated.

### (Examples 1C to 9C and Comparative Examples 1C to 5C)

### 1C) Drying property test

An active energy ray curable composition prepared from each component described in Table 1C was coated on a piece of one-side coated art paper (art paper, manufactured by Oji Paper Co., Ltd.) using an RI tester, and cured with a metal halide lamp (lamp distance: 11 cm, conveyor speed: 100 m/min) having an output of 80 W/cm. Note that, as the UV curing apparatus, a conveyor type ultraviolet curing apparatus manufactured by Eye Graphics Co., Ltd. was used. The sample was passed a plurality of times until no fingerprint was left on the surface (tack free) when the coating film was touched with a finger. The case where the number of times of passage was 3 or less was evaluated as ⊙, the case where the number of times of passage was 4 or 5 was evaluated as ○, and the case where the number of times of passage was 6 or more was evaluated as ×. The evaluation results are shown in Table 1C.

### 2C) Scratch property test

An active energy ray curable composition prepared from each component described in Table 1C was coated on a piece of one-side coated art paper in the same manner as in the drying property test, and cured. The surface of the obtained coating film was rubbed with a nail to confirm the surface state. The case where the coating film exhibited no change or the coating film was scraped with resisting was evaluated as ○, and the case where the coating film was easily scraped was evaluated as ×. The evaluation results are shown in Table 1C.

**Table 1C**

| | | Example 1C | Comparative Example 1C | Comparative Example 2C | Comparative Example 3C | Example 2C | Comparative Example 4C | Example 3C | Comparative Example 5C | Example 4C | Example 5C | Example 6C | Example 7C | Example 8C | Example 9C |
|---|---|---|---|---|---|---|---|---|---|---|---|---|---|---|---|
| Resin | Copolymer 1C | 20 | 20 | | | 20 | | 20 | | 20 | 20 | 20 | 20 | 20 | 20 |
| | U-2PPA*1 | | | 20 | 20 | | 20 | | 20 | | | | | | |
| Monomer | DPHA*2 | 80 | 80 | 80 | 80 | 80 | 80 | 80 | 80 | 80 | 80 | 80 | 80 | 80 | 80 |
| Photopolymerization initiator | Omnirad 369*3 | 2.5 | 2.5 | 2.5 | 2.5 | 2.5 | 2.5 | 2.5 | 2.5 | | | | | | |
| | Omnirad TPO*4 | | | | | | | | | 2.5 | 2.5 | 2.5 | | | |
| | Omnirad 819*5 | | | | | | | | | | | | 2.5 | 2.5 | 2.5 |
| Sensitizer | EAB-SS*6 | 2.5 | | | 2.5 | | | | | 2.5 | | | 2.5 | | |
| | KAYACURE DETX-S*7 | | | | | 2.5 | 2.5 | | | | 2.5 | | | 2.5 | |
| | KAYACURE EPA*8 | | | | | | | 2.5 | 2.5 | | | 2.5 | | | 2.5 |
| Drying property | | ○ | × | × | × | ⊙ | × | ○ | × | ○ | ⊙ | ○ | ○ | ○ | ○ |
| Scratch property | | ○ | ○ | ○ | ○ | ○ | ○ | ○ | ○ | ○ | ○ | ○ | ○ | ○ | ○ |

Components other than copolymer 1C shown in Table 1C are as follows.

The composition amounts shown in Table 1C are expressed in parts by mass.
^{∗}1: U-2PPA: urethane acrylate, manufactured by Shin-Nakamura Chemical Co., Ltd.
^{∗}2: DPHA: Aronix M-404 dipentaerythritol hexaacrylate, manufactured by Toagosei Co., Ltd.
^{∗}3: Omnirad 369: 2-benzyl-2-dimethylamino-1-(4-morpholinophenyl)-butanone-1, manufactured by IGM Resins B.V.
^{∗}4: Omnirad TPO: 2,4,6-trimethylbenzoyl-diphenylphosphine oxide, manufactured by IGM Resins B.V.
^{∗}5: Omnirad 819: bis(2,4,6-trimethylbenzoyl)-phenylphosphine oxide, manufactured by IGM Resins B.V.
^{∗}6: EAB-SS: 4,4'-bis-(diethylamino)benzophenone, manufactured by Daido Chemical Industry Co., Ltd.
^{∗}7: KAYACURE DETX-S: 2,4-diethylthioxanthone, manufactured by Nippon Kayaku Co., Ltd.
^{∗}8: KAYACURE EPA: p-dimethylaminobenzoic acid ethyl ester, manufactured by Nippon Kayaku Co., Ltd.

Table 1C reveals that the photocurable resin composition containing the styrene-acrylate copolymer of the third aspect and various sensitizers has excellent drying property and scratch resistance.

### INDUSTRIAL APPLICABILITY

The photocurable resin composition of the first aspect has excellent drying property and scratch resistance with respect to a base material such as paper, and is excellent in each physical property such as compatibility, drying property, adhesion, and scratch resistance even when used as an ink, and thus is useful for various printing inks, coating materials, coating agents, photoresists, and the like.

Each of the photocurable resin compositions of the second aspect and the third aspect has excellent drying property and scratch resistance with respect to a base material such as paper, and is excellent in each physical property such as drying property, adhesion, and scratch resistance even when used as an ink, and thus is useful for various printing inks, coating materials, coating agents, photoresists, and the like.

## Claims

1. A photocurable resin composition comprising: a styrene-acrylate copolymer; and an ethylenically unsaturated compound,
wherein in the styrene-acrylate copolymer,
a proportion of a constituent unit (A) derived from the styrene-based compound is 10 to 90 mol%, and
a proportion of a constituent unit (B) derived from the acrylate compound is 10 to 90 mol%. and
the constituent unit (B) derived from the acrylate compound contains a constituent unit (b-1) derived from a compound having at least three (meth)acryloyl groups in a molecule.

2. A photocurable resin composition comprising: a styrene-acrylate copolymer; a monomer having a radically polymerizable double bond; and a photopolymerization initiator,
wherein in the styrene-acrylate copolymer,
a proportion of a constituent unit (A) derived from the styrene-based compound is 10 to 90 mol%, and
a proportion of a constituent unit (B) derived from the acrylate compound is 10 to 90 mol%, and
the constituent unit (B) derived from the acrylate compound contains a constituent unit (b-1) derived from a compound having at least three (meth)acryloyl groups in a molecule.

3. A photocurable resin composition comprising: a styrene-acrylate copolymer; a monomer having a radically polymerizable double bond; a photopolymerization initiator; and a sensitizer,
wherein in the styrene-acrylate copolymer,
a proportion of a constituent unit (A) derived from the styrene-based compound is 10 to 90 mol%, and
a proportion of a constituent unit (B) derived from the acrylate compound is 10 to 90 mol%, and
the constituent unit (B) derived from the acrylate compound contains a constituent unit (b-1) derived from a compound having at least three (meth)acryloyl groups in a molecule.

4. The photocurable resin composition according to any one of claims 1 to 3, wherein the compound having at least three (meth)acryloyl groups in the molecule is an acrylate compound having three (meth)acryloyl groups or an acrylate compound having four (meth)acryloyl groups.

5. The photocurable resin composition according to any one of claims 1 to 4, wherein the compound having at least three (meth)acryloyl groups in the molecule is at least one selected from the group consisting of trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, and dipentaerythritol tetra(meth)acrylate.

6. The photocurable resin composition according to any one of claims 1 to 5, wherein the constituent unit (B) derived from the acrylate compound further contains a constituent unit (b-2) derived from an aromatic acrylate compound and a constituent unit (b-3) derived from an aliphatic acrylate compound.

7. The photocurable resin composition according to any one of claims 1 to 6, wherein a molecular weight distribution (mass average molecular weight (Mw)/number average molecular weight (Mn)) of the styrene-acrylate copolymer is in a range of 1 to 50.

8. The photocurable resin composition according to any one of claims 1 to 7, wherein an iodine value of the styrene-acrylate copolymer is 1 to 100.

9. An ink comprising the photocurable resin composition according to any one of claims 1 to 8.

10. A coating material comprising the photocurable resin composition according to any one of claims 1 to 8.

11. The coating material according to claim 10, which is the overprint varnish.
